# FASCICULE DE BREVET EUROPEEN

(11) **EP 3 274 661 B1**
(45) Date de publication et mention de la délivrance du brevet: **10.06.2020**
(21) Numéro de dépôt: 16714820.4
(22) Date de dépôt: 25.03.2016
(51) Int. Cl.: G01C 22/02, B60B 3/16, F16B 39/10, G01P 3/487, G06M 1/274, G01B 7/00, B60B 7/16, B60C 23/00

(54) **SYSTÈME AMOVIBLE DE COMPTAGE DES TOURS DE ROUE**
ABNEHMBARES SYSTEM ZUM ZÄHLEN VON RADUMDREHUNGEN
REMOVABLE SYSTEM FOR COUNTING WHEEL REVOLUTIONS

(30) Priorité: 26.03.2015 FR 1552526; 26.03.2015 FR 1552525
(43) Date de publication de la demande: 31.01.2018
(73) Titulaire: Compagnie Générale des Etablissements Michelin, 63000 Clermont-Ferrand (FR)
(72) Inventeur: LEDOUX, Thomas, 63040 Clermont-Ferrand Cedex 9 (FR); MARTIN, Denis, 63040 Clermont-Ferrand Cedex 9 (FR); HEREDIA, Guillaume, 63040 Clermont-Ferrand Cedex 9 (FR); PERNOT, Alexandre, 63040 Clermont-Ferrand Cedex 9 (FR)
(74) Mandataire: Roussy, Delphine
(86) Numéro de dépôt international: PCT/EP2016/056714
(87) Numéro de publication internationale: WO 2016/151138

(56) Documents cités:
- EP-A1- 0 084 764
- EP-A1- 1 669 222
- WO-A1-2013/053760

## Description

### DOMAINE DE L'INVENTION

La présente invention concerne un système de comptage des tours de roue et du kilométrage destiné à être installé sur tout type de véhicule motorisé.

Dans les activités professionnelles de transport, ou la notion de coût est très importante, il est courant de comparer la performance des véhicules, ou de certaines pièces utilisées sur les véhicules, en fonction du kilométrage réalisé.

Cette analyse permet aux gestionnaires de flottes, ou aux prestataires de services travaillant pour ces flottes, de réaliser les choix les plus pertinents du point de vue technique et économique.

Par exemple, dans le cas des pneumatiques, il est courant de comparer le « rendement kilométrique en millimètres » des pneumatiques, afin de choisir le pneumatique le plus économique pour un usage donné. Le calcul de cet indicateur peut se faire très simplement en divisant le nombre de millimètres de gomme à user sur la bande de roulement du pneumatique par le kilométrage parcouru entre la première et la dernière utilisation du pneumatique.

Un autre exemple concerne le suivi de la consommation de carburant des véhicules. Il est en effet courant de réaliser le suivi de la consommation de carburant par kilomètre parcouru. Dans ce cas cela permet, par exemple, d'évaluer l'intérêt de technologies de motorisation moins gourmandes en carburant comparativement à leur coût d'acquisition.

En outre, sur la base de la connaissance du kilométrage, les prestataires de services sont parfois amenés à proposer à leurs clients des contrats dits « kilométriques » dans lesquels le gestionnaire de flotte paye les pneumatiques utilisés en fonction du kilométrage réalisé par les véhicules de la flotte.

Ce type d'offre est particulièrement intéressant, puisqu'il évite aux gestionnaires de flotte d'acheter des pneumatiques neufs, et leur permet de ne payer que ce qui est réellement consommé.

En revanche, cela impose de connaitre le kilométrage réalisé afin de permettre au prestataire de service de facturer la prestation à la fin de chaque mois. Ceci doit pouvoir se faire dans tous les cas, même lorsqu'il s'agit de véhicules non motorisés, qui sont rarement munis de compteurs kilométriques.

Pour toutes ces raisons, il est donc intéressant, pour les gestionnaires de flottes, comme pour leurs prestataires de service, de connaitre le kilométrage réalisé par les véhicules des flottes.

Pour accéder à cette mesure, les gestionnaires de flottes utilisent classiquement des hubodomètres ou des systèmes télématiques équipés de GPS.

Les hubodomètres sont des systèmes installés au niveau du moyeu des véhicules, afin de compter le nombre de tours réalisé par l'essieu qui en est équipé. A partir de cette information, il est ensuite possible de déterminer le kilométrage réalisé en multipliant le nombre de tours enregistrés par le périmètre du pneumatique présent sur le véhicule concerné.

Ces systèmes sont généralement utilisés sur les remorques car cela permet de doter ces véhicules non motorisés d'un compteur kilométrique.

Cependant, c'est une solution qui présente plusieurs inconvénients, puisqu'il s'agit d'un matériel couteux, qui nécessite une installation couteuse et complexe. En effet, celle-ci nécessite une installation par un technicien spécialisé.

Par ailleurs, son utilisation n'est pas très aisée puisque l'information du kilométrage réalisé doit être relevée visuellement, au moyen d'un afficheur disposé sur ledit hubodomètre.

Une autre solution utilisée par les gestionnaires de flottes consiste à équiper leurs véhicules de systèmes télématiques, afin de recueillir le kilométrage par un système GPS.

Cependant, comme dans le cas des hubodomètres, il s'agit de systèmes couteux, car ils nécessitent une installation par des techniciens spécialisés d'une part, et également le paiement d'un abonnement à une société de télématique, d'autre part.

En outre, ces systèmes sont peu précis dans les zones de montagne ou dans les zones urbaines.

Enfin, ces systèmes étant déployés par les gestionnaires de flottes, les prestataires de service agissant pour ces flottes n'ont souvent pas accès à l'information remontant de ces systèmes télématique. Il ne leur est donc pas possible de s'en servir pour facturer d'éventuelles prestations en contrat kilométrique.

On connaît également, du document EP1 669 222, un système de compte de roues, mais qui présente l'inconvénient d'être complexe et cher à installer.

La présente invention a donc pour but de remédier à ces difficultés en proposant un système de comptage des tours de roue et du kilométrage à faible coût, ne nécessitant pas d'installation couteuse et permettant la mise à disposition de l'information à distance pour les gestionnaires de flotte comme pour leurs prestataires de service.

### BREVE DESCRIPTION DE L'INVENTION

Ainsi, l'invention propose un système de comptage du nombre de tours de roue d'un véhicule comprenant :
- un dispositif électronique de comptage du nombre de tours de roue,
- un dispositif de transmission, des données issues du dispositif électronique de comptage, jusqu'à une base de données distante,
le système comprenant en outre un boitier accueillant le dispositif électronique de comptage, et des moyens d'accrochage permettant l'accrochage amovible du boitier sur un dispositif anti-desserrement d'écrou installé sur une roue du véhicule.

Le système anti-desserrement d'écrou peut être avantageusement conçu de façon à pouvoir être adapté à des écrous de tailles différentes et à des entraxes entre écrous plus ou moins important. Ainsi, l'ensemble constitué par le dispositif de comptage de tours de roues fixé sur un anti-desserrement d'écrou est compatible avec le plus grand nombre de véhicules présents sur le marché. On précise également que le dispositif anti-desserrement pourrait être mis en œuvre indépendamment de la présente invention.

Cet ensemble peut ensuite être rapporté manuellement en quelques secondes sur la roue du véhicule, par un technicien de la flotte concernée ou par un technicien d'un prestataire de service agissant pour ladite flotte. Il s'agit donc d'une procédure de montage simple et rapide.

Ainsi, dans un exemple de réalisation, les moyens d'accrochage comprennent au moins un premier élément solidaire du boitier, et destiné à coopérer avec au moins un second élément solidaire du dispositif anti-desserrement. De manière préférentielle, les moyens d'accrochage comportent des moyens d'emboitage élastique. Plus précisément, le premier et/ou second élément est un élément mâle, destiné à coopérer avec une ouverture ménagée dans le boitier et/ou dans le dispositif anti-desserrement.

Dans un mode de réalisation, le boitier est ainsi muni d'au moins un élément plastique destiné à être enclipsé dans un trou ou une encoche ménagée dans le dispositif anti-desserrement. Les éléments plastiques peuvent être circulaires ou rectangulaires.

De tels moyens d'accrochage présentent de nombreux avantages, notamment parce qu'ils sont peu coûteux, et parce qu'ils permettent une installation aisée sur un dispositif anti-desserrement. Dans un mode de réalisation préférentielle, l'accrochage est réversible, ce qui permet d'enlever le boitier si nécessaire, par exemple pour une réparation ou un changement de pile ou de batterie, ou une utilisation sur une autre roue.

En outre, ces moyens d'accrochage sont tels que, dans le cas où un véhicule ne dispose pas de dispositif anti-desserrement, il est possible d'accrocher le boitier sur un enjoliveur, ou flasque, installé sur une roue du véhicule. Cet accrochage nécessite, dans certains cas, quelques adaptations de l'enjoliveur, par exemple la réalisation de trous permettant d'accueillir les éléments solidaires du boitier.

Dans un autre exemple de réalisation, le système comprend en outre des moyens de reprise d'effort s'exerçant entre le boitier et le dispositif anti-desserrement. Ces moyens de reprise d'effort son préférablement distincts des moyens d'accrochage, afin d'éviter que les efforts subis ne provoquent un décrochage ou une casse du boitier.

Dans un mode de réalisation préférentiel, le dispositif électronique de comptage des tours de roue comprend des moyens permettant la mesure d'un champ magnétique.

Dans un exemple de réalisation, ces moyens de mesure d'un champ magnétique comprennent deux capteurs, dont les axes sensibles sont disposés en quadrature, c'est à dire orientés à 90 degrés l'un par rapport à l'autre.

L'utilisation de capteurs en quadrature permet de rendre le dispositif moins sensible aux perturbations extérieures. En effet, dans le cas où le système selon un objet de l'invention se trouverait soumis à des champs magnétiques alternatifs de polarisation linéaire, couramment présents aux abords des lignes à haute tension, des transformateurs ou des moteurs électriques, l'utilisation de deux capteurs permet de diminuer le risque que les perturbations soient perçues simultanément par les capteurs.

Dans une réalisation alternative, il est également possible de ne fonctionner qu'avec un unique capteur, afin de réduire le coût du dispositif électronique de comptage des tours de roue.

Dans une réalisation préférentielle, le dispositif de transmission de données comprend des moyens pour transmettre les données par voie Hertzienne, de préférence avec une portée courte ou moyenne.

Les moyens de transmission dits « de courte ou moyenne portée » présentent l'avantage d'être plus économes du point de vue de la consommation électrique. Ainsi, il est possible d'alimenter le dispositif électronique avec une pile ou une batterie dont la durée de vie sera de plusieurs années, et ne nécessitera donc pas de remplacements trop fréquents.

Avantageusement, un ou des dispositifs de transmission des données reçues par les dispositifs électroniques de comptage des tours de roue sont installés au plus près du ou des lieux de passages des véhicules équipés.

Par exemple, ces dispositifs sont situés sur le site de la flotte, aux barrières de péage à l'entrée des autoroutes, ou encore dans des stations-service.

Ces dispositifs peuvent être des passerelles web munies d'une part, de moyens de réception par voie Hertzienne des trames en provenance des dispositifs électroniques de comptage des tours de roue et d'autre part, de moyens de transmission longue distance, tel un modem GPRS ou une connexion Ethernet.

Alternativement, on peut utiliser dans les dispositifs de comptage des tours de roue, des moyens de transmission de données à grande distance mais à bas débit, dit « Narrow Band » ou « Ultra Narrow Band ».

Ces dispositifs sont également intéressants du point de vue de la consommation électrique, et sont proposés par des opérateurs de réseau dédiés aux objets communicants.

Dans ce cas, c'est le réseau desdits opérateurs qui joue le rôle de dispositif de transmission des données émises, par le premier dispositif électronique de comptage des tours de roue, jusqu'à une base de donnée distante.

Ainsi, dans un cas comme dans l'autre, le dispositif de comptage des tours de roue selon un objet de l'invention, décharge l'information du nombre de tours de roue réalisés par les véhicules composant la flotte, dans une base de données distante, à chaque retour desdits véhicules sur leur lieu de stationnement, sans nécessiter d'intervention humaine.

Dans un mode de réalisation avantageux, la base de données distante comporte en outre des informations concernant les pneumatiques montés sur les véhicules par exemple le rayon de roulement, ou le périmètre des pneumatiques. Cette information permet, au moyen d'un calcul simple, de convertir l'information du nombre de tours réalisés, en kilométrage effectué par le véhicule équipé.

Dans une réalisation préférentielle, le boitier est un étui de protection réalisé en un matériau amagnétique, permettant de résister à des températures situés entre -40°C et +125°C, par exemple de l'aluminium ou du plastique. Pour assurer la protection de l'électronique de comptage des tours de roue, une fois l'électronique insérée dans l'étui, on peut avantageusement noyer ladite électronique dans une résine de protection.

Alternativement, on peut prévoir des moyens de fermeture hermétique dudit étui, afin d'assurer l'étanchéité nécessaire au bon fonctionnement de l'électronique, même en condition d'utilisation par temps pluvieux.

Dans une réalisation avantageuse, le dispositif anti-desserrement d'écrou comporte deux pièces, chaque pièce comprenant :
- un dispositif de fixation sur écrou dont le diamètre est adaptable, et
- des moyens de coopération avec l'autre pièce du système, ces moyens permettant une adaptation de l'entraxe entre les deux dispositifs de fixation.

Dans un mode de réalisation particulier, le dispositif de fixation sur écrou comporte une bague de diamètre adaptable. Cette bague est préférentiellement en matériau plastique, et présente une face intérieure crantée afin de pouvoir se fixer sur les écrous, quel que soit l'azimut de serrage desdits écrous.

Dans un autre mode de réalisation, le système comprend en outre au moins une pièce d'adaptation, installée entre le dispositif de fixation et l'écrou, et permettant une adaptation du diamètre.

Dans un autre mode de réalisation, le dispositif de fixation comprend des moyens de verrouillage à un diamètre donné. Ce verrouillage permet un préréglage du diamètre de la bague crantée, tenant compte de la dimension de l'écrou sur lequel elle sera montée. Ces moyens de verrouillage seront ultérieurement décrits, et comprennent par exemple une languette que l'on peut verrouiller au moyen d'un ou plusieurs clips plastiques, de forme circulaire ou rectangulaire.

Dans un mode de réalisation préférentiel, les moyens de coopération comportent des rails permettant de faire coulisser une pièce du système par rapport à l'autre.

Dans un autre mode de réalisation, les moyens de coopération comportent un élément mâle solidaire d'une pièce du système, et un élément femelle solidaire de l'autre pièce du système, l'élément mâle et femelle coopérant de manière à créer une liaison pivot entre les deux pièces.

Des exemples de réalisation d'un tel dispositif anti-desserrement seront ultérieurement décrits à l'aide de figures.

L'invention concerne également un système de calcul du rendement pneumatique d'un véhicule, comportant un système de comptage du nombre de tours selon l'invention et comportant en outre des moyens de suivi de l'usure des pneumatiques du véhicule dont le kilométrage est mesuré.

Dans une réalisation préférentielle, les moyens de suivi de l'usure des pneumatiques sont des dispositifs posés au sol, ou des dispositifs manuels.

Pour ce faire, le système de suivi de l'usure des pneumatiques utilisé peut être de toute nature. Il en existe, par exemple, qui sont disposés sur un sol de roulage et qui permettent la mesure de l'état d'usure du pneumatique à chaque passage d'un véhicule sur ledit système.

Classiquement, ces systèmes utilisent des moyens de mesure optique mettant en œuvre des lasers.

Alternativement ces moyens de mesure sont magnétiques et mettent en œuvre des capteurs à courants de Foucault ou des capteurs à reluctance variable.

D'autres systèmes se présentent sous la forme d'une jauge de profondeur et nécessitent l'intervention d'un technicien afin de relever l'information de l'état d'usure du pneumatique.

Dans les deux cas, ces systèmes peuvent être connectés à la base de données distante utilisée pour la mesure du kilométrage des véhicules, et ainsi, permettre le calcul du rendement kilométrique des pneumatiques utilisés par les véhicules, directement dans ladite base de données.

Dans le cas où ces systèmes ne disposent pas de moyens de communication, il est possible également de les utiliser afin de réaliser la mesure et d'entrer manuellement cette mesure dans la base de donnés distante du système selon un objet de l'invention.

### BREVE DESCRIPTION DES FIGURES

D'autres objectifs et avantages de l'invention apparaîtront clairement dans la description qui va suivre de quelques modes de réalisation préférés mais non limitatifs, illustrés par les figures suivantes dans lesquelles :
- Les figures 1a et 1b montrent un exemple de réalisation d'une carte électronique et de son principe de comptage des tours de roue selon l'invention
- La figure 2, montre un exemple d'étui contenant une électronique de comptage des tours de roue selon un objet de l'invention,
- Les figures 2b et suivantes montrent des exemples de dispositif anti desserrement d'écrou mis en œuvre dans un système selon l'invention
- Les figures 4a et 4b montrent un véhicule poids lourd équipé d'un système de comptage des tours de roue, associé à des moyens de transmission de l'information mesurée jusqu'à une base de données distante selon l'invention,

### DESCRIPTION DU MEILLEUR MODE DE REALISATION DE L'INVENTION

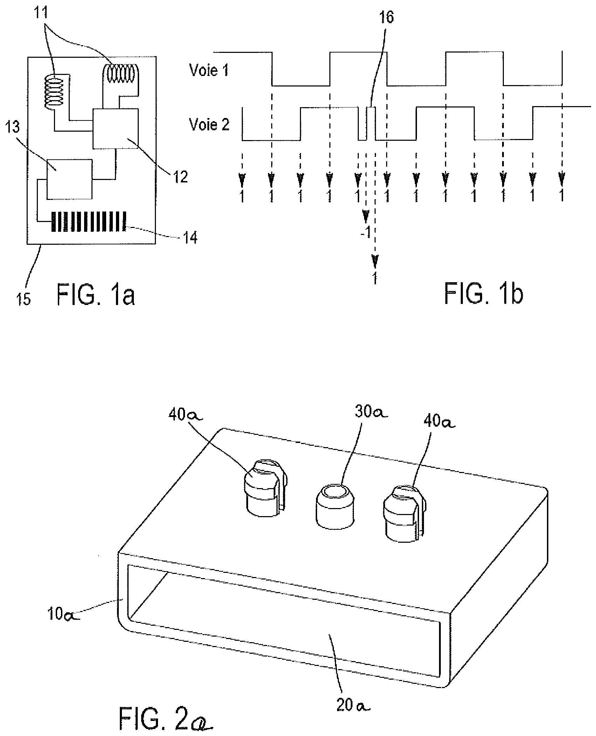

Les figures 1a et 1b montrent un exemple de réalisation d'un dispositif électronique de comptage des tours de roue 15 mis en œuvre dans un système de comptage des tours selon l'invention.

Dans cet exemple, le comptage des tours de roue est assuré par une mesure du champ magnétique terrestre depuis la roue du véhicule. Dans ce cas, le champ mesuré voit son intensité évoluer de façon sinusoïdale au fur et à mesure de la rotation de la roue. Il suffit donc de compter les périodes dudit signal sinusoïdal pour connaitre le nombre de tours de roue effectués.

Dans l'exemple de la figure 1a, la mesure du champ magnétique terrestre s'effectue au moyen de deux bobines 11 dont les axes sensibles sont orientés à quatre-vingt-dix degrés l'un par rapport à l'autre. Cette configuration procure au système une plus grande résistance aux perturbations électromagnétiques extérieures et ainsi permet de garantir la justesse du comptage des tours de roue.

En effet, dans le cas où le système selon un objet de l'invention se trouverait soumis à des champs magnétiques alternatifs de polarisation linéaire, couramment présents aux abords des lignes à haute tension, des transformateurs ou des moteurs électriques, il serait peu probable que lesdites perturbations soient perçues simultanément par les deux bobines.

Dans l'exemple des figures la et 1b, les deux bobines sont connectées à une électronique d'amplification et de comptage des périodes 12. Cette électronique est elle-même connecté à une électronique de transmission d'information à distance par voie hertzienne 13. Les informations sont finalement envoyées en utilisant l'antenne 14.

La figure 1b montre un exemple de sortie de chacune des deux bobines après amplification du signal sinusoïdal et adaptation dudit signal entre zéro et cinq Volts par l'électronique d'amplification 12. Elle illustre la façon dont sont comptés les tours de roue en rejetant d'éventuelles perturbations vue par une des deux voies.

Un compteur intégré à la fonction d'amplification et de comptage 12 augmente sa valeur d'une unité lorsque :
- Un front montant sur la voie 1 est associé à un niveau haut sur la voie 2
- Un front descendant sur la voie 1 est associé à un niveau bas sur la voie 2
- Un front montant sur la voie 2 est associé à un niveau bas sur la voie 1
- Un front descendant sur la voie 2 est associé à un niveau haut sur la voie 1

Toute autre association de front et de niveau sur les deux voies provoque la baisse de la valeur du compteur d'une unité. De cette façon, la perturbation 16 provoque d'abord une baisse de la valeur du compteur d'une unité, puis une augmentation de la valeur de ce compteur d'une unité, évitant ainsi de compter un tour supplémentaire de façon erronée.

Dans l'exemple des figures la et 1b, cette mise à profit du montage en quadrature est assuré par un algorithme embarqué dans la fonction électronique 12, mais il est parfaitement possible d'aboutir au même résultat en utilisant une association de bascules et de fonctions de logiques booléennes évidente pour l'homme de l'art.

La figure 2a montre un exemple de réalisation d'un étui de protection de l'électronique 10 selon un objet de l'invention.

Dans cet exemple, l'étui de protection 10a est un parallélépipède creux dont une face a été supprimée, de sorte que l'électronique de comptage des tours de roue, non représentée ici et décrite dans la figure 1, puisse être insérée dans l'étui 10a par l'ouverture 20a ainsi aménagée.

Dans une réalisation avantageuse, une résine de protection est ensuite coulée dans l'étui afin de protéger ladite électronique.

Dans cet exemple, l'étui 10a est muni de deux clips circulaires 40a, destinés à permettre la fixation de l'étui 10a aux écrous ou à la jante, d'une roue d'un véhicule dont le kilométrage doit être mesuré. Dans un exemple de réalisation, une pièce intermédiaire peut être positionnée entre l'étui 10a et la jante et/ou les écrous.

Dans cet exemple on distingue également un plot de centrage 30a, qui permet avantageusement d'offrir une butée de reprise des efforts de cisaillement, en sus des clips.

Dans cet exemple, l'étui est muni de deux clips et d'un plot. Dans la pratique le nombre de clips et de plots peut-être différent. Avantageusement le nombre de clips est compris entre un et dix et le nombre de plots est compris entre un et dix.

Avantageusement, les clips et plots de centrage sont tous circulaires de sorte qu'il soit possible de fixer cet étui 10a sur des interfaces variées, en aménageant simplement les trous nécessaires au moyen d'une perceuse, afin d'insérer lesdits clips et plots au travers de ladite interface. Cependant il est aussi possible de réaliser un étui muni de clips et/ou plots dont la forme n'est pas circulaire. Par exemple, il est possible d'utiliser des clips et/ou plots rectangulaires.

Dans le cas où ledit étui 10a, décrit dans la figure 2a, est fixé sur un système anti desserrement d'écrou, celui-ci doit être muni des perçages nécessaires à l'insertion des clips et plots présents sur l'étui. Dans cet exemple, l'anti desserrement approprié serait donc équipé de trois trous disposés le long d'une ligne.

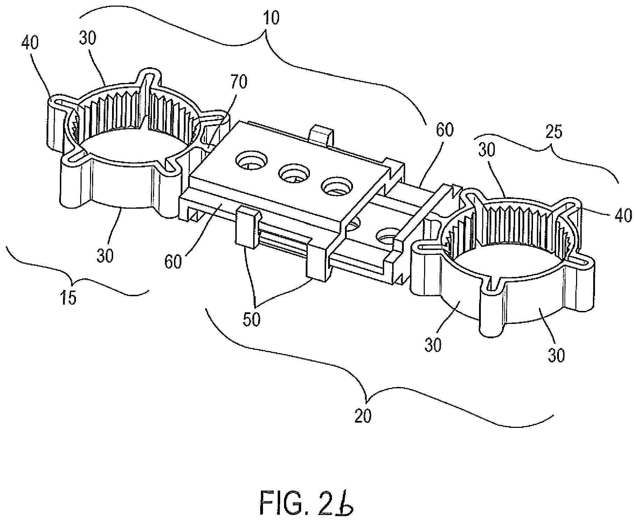

La figure 2b montre un exemple de réalisation d'un système anti desserrement d'écrou selon un objet de l'invention.

Dans cet exemple, la fonction anti desserrement est assurée par deux pièces 10 et 20 identiques reliées l'une à l'autre par une liaison glissière.

Dans cet exemple, la liaison glissière est réalisée au moyen de deux rails 60, montés l'un sur l'autre tête bêche, et liés l'un à l'autre au moyen de clips rectangulaires 50, disposés de part et d'autre et à l'extrémité de chacun des rails 60.

Ce faisant, les deux pièces 10 et 20 peuvent coulisser l'une par rapport à l'autre afin d'augmenter ou diminuer la distance entre les deux dispositifs de fixation sur écrou 15 et 25.

Dans cet exemple, la distance maximale entre les deux dispositifs de fixation sur écrou 15 et 25 est atteinte lorsque les clips 50 entrent en contact.

Ainsi, ce système anti-desserrement d'écrou peut s'adapter à différentes distances entre écrou, et être utilisé sur des véhicules dont le mode de fixation des roues est variable.

Il faut noter que chacune des pièces 10 et 20 est constituée d'une moitié de liaison glissière et d'un dispositif de fixation sur écrou. Ces deux éléments sont reliés l'un à l'autre par une nervure 70 dont l'épaisseur faible permet au dispositif de fixation sur écrou de pivoter relativement à la liaison glissière.

Cette nervure 70 constitue en effet un élément de liaison déformable qui permet de faciliter le montage du système anti desserrement d'écrou sur un couple d'écrou, puisqu'il offre un degré de liberté supplémentaire au système.

En outre, dans cet exemple, chaque dispositif de fixation sur écrou 15 et 25, est réalisé sous la forme d'une bague crantée dont le diamètre peut être adapté à différentes tailles d'écrous.

Pour ce faire, les bagues crantées constituant les dispositifs 15 et 25 sont fendues en plusieurs endroits. Chaque portion de bague crantée 30 ainsi obtenue, est reliée aux autres portions de bague 30 par une interface 40 en forme de U.

Ainsi, les portions de bagues crantées 30 peuvent être éloignées des centres des dispositifs de fixation sur écrou 15 et 25 en déformant les interfaces 40. Se faisant, ces dispositifs peuvent être positionnés sur des écrous de taille plus ou moins importante.

Afin d'assurer une bonne capacité de déformation à ces interfaces en forme de U, les dimensions de ces interfaces, ainsi que le matériau constitutif des pièces 10 et 20 sont choisis de sorte que la limite élastique du matériau ne soit pas atteinte même lorsque le dispositif de fixation sur écrou est positionné sur un écrou de grande dimension.

En outre, les dimensions de ces interfaces, ainsi que le matériau constitutif des pièces 10 et 20 sont avantageusement choisis afin d'assurer un serrage relatif, par retour élastique, de ces dispositifs de fixation sur écrou, sur les écrous pour lesquels ils sont destinés, quelles que soient les dimensions desdits écrous.

Dans cet exemple, chaque bague crantée est munie de cinq interfaces en forme de U mais cela n'est pas une obligation. Préférentiellement, les dispositifs de fixation sur écrou peuvent être munis de une à dix interfaces en forme de U.

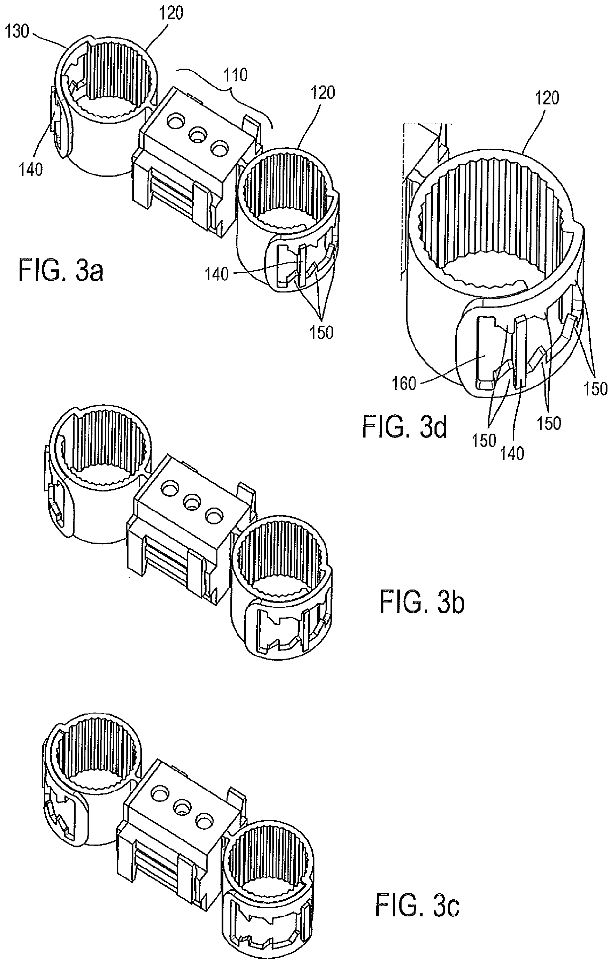

Les figures 3a, 3b, 3c et 3d montrent un second exemple de réalisation d'un système anti desserrement d'écrou selon un objet de l'invention. Cet exemple est préférentiellement destiné à être utilisé sur des roues de poids lourd ou de bus.

Comme dans l'exemple précédent, la fonction anti desserrement est assurée par deux pièces identiques reliées l'une à l'autre par une liaison glissière 110. Dans cet exemple, la liaison glissière est identique à celle décrite dans l'exemple de la figure 2.

De même, chaque rail constituant ladite liaison glissière est relié à un dispositif de fixation sur écrou par un élément déformable, comme décrit dans la figure 2.

Ainsi, ce système anti-desserrement d'écrou peut s'adapter à différentes distances entre écrou, et être utilisé sur des véhicules dont le mode de fixation des roues est variable.

En outre, dans l'exemple des figures 3a, 3b, 3c et 3d, chaque dispositif de fixation sur écrou 120, est réalisé sous la forme d'une bague crantée dont le diamètre peut être adapté à différentes tailles d'écrous.

Pour ce faire, dans cet exemple, les bagues crantées 120 constituants les dispositifs de fixation sur écrou sont fendues en un unique endroit, à l'opposé de la glissière, sur toute la hauteur desdites bagues crantées.

De part et d'autre de cette fente on trouve d'une part une languette 130 et d'autre part un clip rectangulaire 140.

La languette 130 est munie d'une ouverture en son centre, aménagée sur toute sa longueur, dont la forme est conçue afin de disposer de dents 150 sur la partie inférieure et supérieure de ladite ouverture. Ces couples de dents 150 constituent des butées contre lesquelles le clip rectangulaire 140 pourra être verrouillé.

Ces butées sont disposées le long de la languette de façon à permettre un préréglage du diamètre de la bague crantée 120 pour différentes tailles d'écrous.

Dans le cas des figures 3a, 3b, 3c et 3d, trois positions sont possibles, permettant par exemple de prérégler le diamètre des bagues crantées 120 pour des écrous de taille vingt-sept, trente et trente-deux.

L'exemple de la figure 3a montre la position du clip rectangulaire dans la languette pour un montage sur écrou de trente-deux.

L'exemple de la figure 3b montre la position du clip rectangulaire dans la languette pour un montage sur écrou de trente.

L'exemple de la figure 3c montre la position du clip rectangulaire dans la languette pour un montage sur écrou de vingt-sept.

En outre, afin d'éviter que la languette puisse se désolidariser du clip rectangulaire, ce dernier est conçu de sorte que sa base soit plus étroite que sa partie supérieure.

Pour permettre le montage, compte tenu de la forme du clip, le début de l'ouverture aménagée dans la languette 130 est une lumière 160 dont la dimension respectivement de bas en haut et de gauche à droite est au moins égale à la plus grande dimension du clip de bas en haut et de gauche à droite. Cette lumière 160 est visible en particulier sur le dessin 3d qui est une vue agrandie d'une bague de la figure 3a.

Une fois engagée dans cette lumière 160, le clip est ensuite glissé jusqu'à ce qu'il dépasse le premier couple de butées 150. Ce faisant, il lui est ensuite impossible de ressortir de l'ouverture aménagée dans la languette 130. Dans cette situation, le dispositif de fixation sur écrou est prêt pour un montage sur un écrou de trente-deux millimètres.

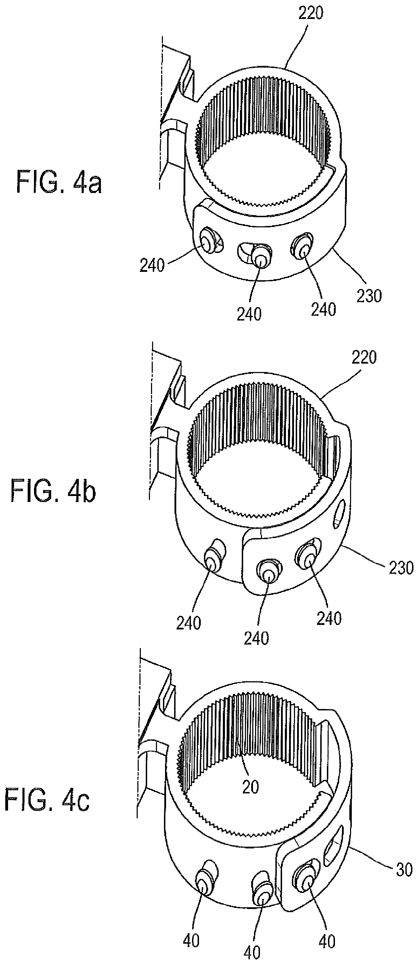

Les figures 4a, 4b, 4c montrent une variante d'un dispositif de fixation sur écrou mis en œuvre dans un système selon l'invention.

Comme dans l'exemple précédent, la fonction anti desserrement présentée dans cet exemple de dispositif de fixation sur écrou peut être assurée par deux pièces identiques reliées l'une à l'autre par une liaison glissière. Dans les figures 4a, 4b et 4c, ladite liaison glissière n'est pas représentée mais peut être identique à celle décrite dans l'exemple de la figure 2.

De même, chaque rail constituant ladite liaison glissière peut être relié à un dispositif de fixation sur écrou par un élément déformable, comme décrit dans la figure 2.

Ainsi, ce système anti-desserrement d'écrou peut s'adapter à différentes distances entre écrous, et être utilisé sur des véhicules dont le mode de fixation des roues est différent.

En outre, comme dans les exemples précédents, chaque dispositif de fixation sur écrou représenté dans les figures 4a, 4b et 4c est réalisé sous la forme d'une bague crantée dont le diamètre peut être adapté à différentes tailles d'écrous.

Pour ce faire, dans cet exemple, les bagues crantées 220 constituants les dispositifs de fixation sur écrou sont fendues en un unique endroit, à l'opposé de la glissière, sur toute la hauteur desdites bagues crantées.

De part et d'autre de cette fente on trouve d'une part une languette 230 et d'autre part trois clips circulaires 240.

La languette 230 est percée en plusieurs positions afin de permettre le verrouillage de ladite languette sur les clips circulaires 240 à différentes positions correspondant aux différentes tailles d'écrous sur lesquels le dispositif de fixation sur écrou devra être positionné.

Dans la pratique le nombre de clips et de trous doit être préférentiellement supérieur à un, mais plusieurs configurations sont possibles.

Dans le cas des figures 4a, 4b, et 4c, trois positions sont possibles, permettant par exemple de prérégler le diamètre des bagues crantées 220 pour des écrous de taille vingt-sept, trente et trente-deux.

L'exemple de la figure 4a montre la position des clips circulaires dans la languette pour un montage sur écrou de vingt-sept.

L'exemple de la figure 4b montre la position des clips circulaires dans la languette pour un montage sur écrou de trente.

L'exemple de la figure 4c montre la position des clips circulaires dans la languette pour un montage sur écrou de trente-deux.

Dans ces exemples, les clips circulaires sont conçus de façon à ce que, une fois insérés dans les trous, lesdits clips ne puissent s'en désengager sans intervention humaine. Pour ce faire, leur forme rappelant celle d'un champignon, est avantageusement dimensionnée pour permettre un verrouillage solide des clips dans les trous de la languette.

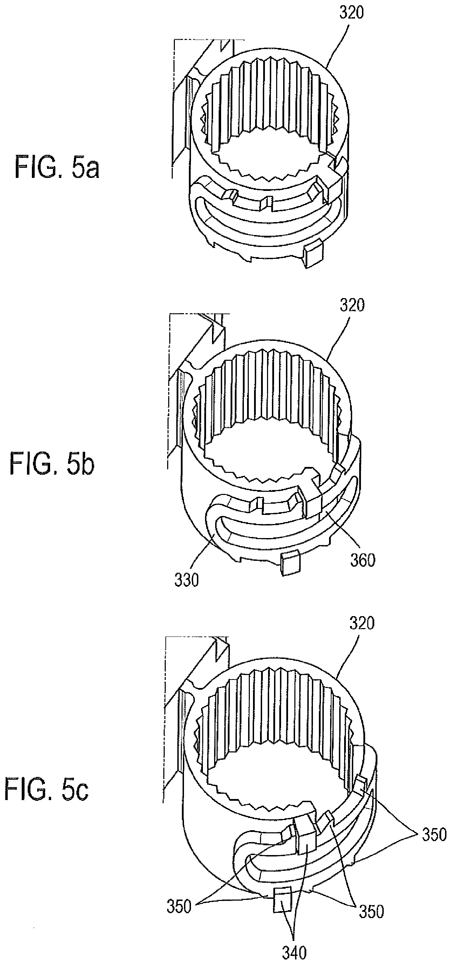

Les figures 5a, 5b et 5c montrent un dernier exemple de réalisation d'un système anti desserrement d'écrou selon un objet de l'invention. Cet exemple est préférentiellement destiné à être utilisé sur des roues de poids lourd ou de bus.

Comme dans l'exemple des figures 3a, 3b, 3c et 3d, la fonction anti desserrement est assurée par deux pièces identiques reliées l'une à l'autre par une liaison glissière. Dans cet exemple, la liaison glissière est identique à celle décrite dans l'exemple de la figure 2.

De même, chaque rail constituant ladite liaison glissière peut être relié à un dispositif de fixation sur écrou par un élément déformable, comme décrit dans la figure 2.

Ainsi, ce système anti-desserrement d'écrou peut s'adapter à différentes distances entre écrous, et être utilisé sur des véhicules dont le mode de fixation des roues est variable.

Dans l'exemple des figures 5a, 5b et 5c, chaque dispositif de fixation sur écrou, est réalisé sous la forme d'une bague crantée 320 dont le diamètre peut être adapté à différentes tailles d'écrous.

Pour ce faire, dans cet exemple, les bagues crantées 320 constituants les dispositifs de fixation sur écrou sont fendues en un unique endroit, à l'opposé de la glissière, sur toute la hauteur desdites bagues crantées.

De part et d'autre de cette fente on trouve d'une part une languette 330 et d'autre part deux clips rectangulaires 340.

Dans cet exemple, la languette 330 est munie sur sa tranche externe de plusieurs couples de dents 350, rappelant la forme d'une crémaillère et constituant plusieurs zones de verrouillage permettant l'adaptation du diamètre de la bague 320 à différentes tailles d'écrous.

Dans la pratique, les clips rectangulaires 340 viennent se caler contre les dents 350, afin de bloquer le diamètre de la bague crantée au réglage adapté.

En outre, la languette 330 est munie d'une ouverture 360 aménagée en son centre, sur toute sa longueur, avantageusement dimensionnée de sorte que ladite languette puisse se déformer lors du passage d'une zone de verrouillage à l'autre. Cette disposition permettant un réglage facilité du dispositif de verrouillage sur écrou.

Dans cet exemple, de même que dans l'exemple des figures 3a, 3b et 3c, trois positions sont possibles, permettant par exemple de prérégler le diamètre des bagues crantées 20 pour des écrous de taille vingt-sept, trente et trente-deux.

L'exemple de la figure 5a montre la position que le système de fixation sur écrou doit adopter pour un montage sur écrou de vingt-sept.

L'exemple de la figure 5b montre la position que le système de fixation sur écrou doit adopter pour un montage sur écrou de trente.

L'exemple de la figure 5c montre la position que le système de fixation sur écrou doit adopter pour un montage sur écrou de trente-deux.

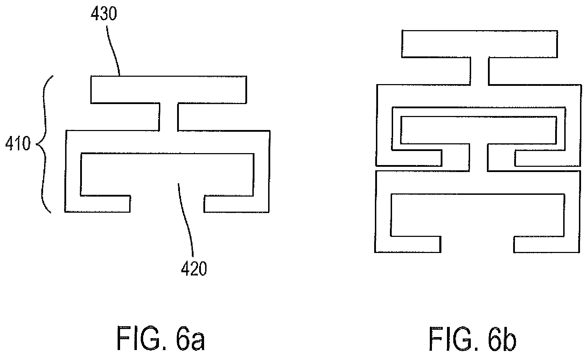

Les figures 6a et 6b montrent une coupe d'un exemple de dispositif de connexion entre dispositifs de fixation sur écrou, selon l'invention.

Dans cet exemple, le dispositif de connexion est constitué de deux rails coulissants l'un dans l'autre.

Pour ce faire, chaque rail 410 est constitué d'une partie mâle 430 et d'une partie femelle 420. Pour réaliser une glissière, il suffit alors d'insérer une partie mâle d'un rail dans la partie femelle d'un autre rail. Cette configuration est visible dans le dessin de la figure 6b.

Dans cet exemple, aucun clip n'est présent sur les rails composants la glissière du dispositif de connexion. Ce faisant, si on écarte trop les deux dispositifs de fixation sur écrou situé chacun à une extrémité opposé de chacun des deux rails, aucune butée n'empêche de séparer les deux pièces, comme c'était le cas dans l'exemple de la figure 2.

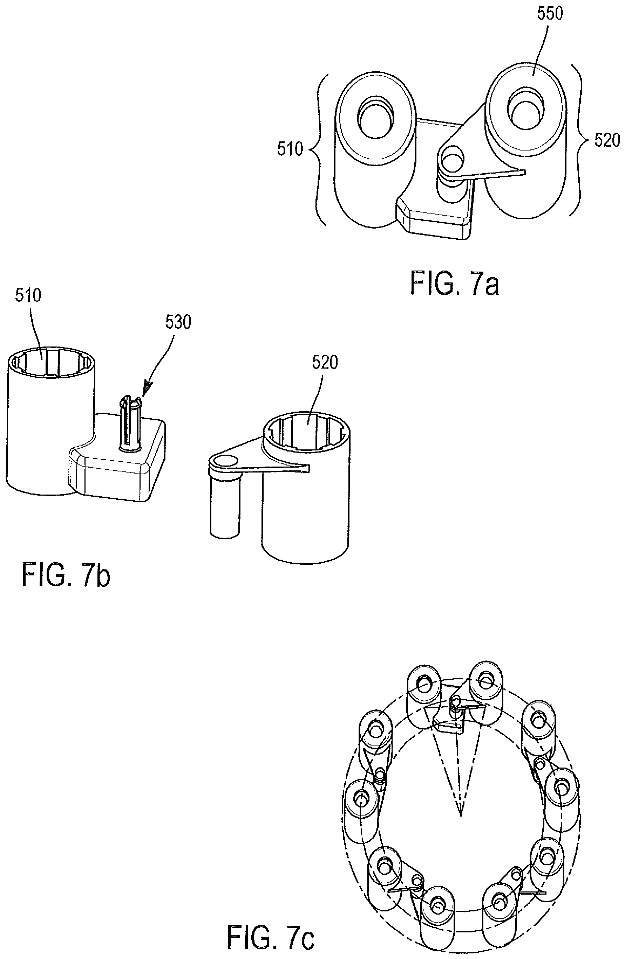

La figure 7a montre un autre exemple de réalisation d'un système anti desserrement d'écrou selon un objet de l'invention. Dans cet exemple, la fonction anti desserrement est assurée par plusieurs éléments dont les deux pièces 510 et 520 pivotant l'une par rapport à l'autre au moyen d'une liaison pivot 530. Ladite liaison pivot est réalisée au moyen d'un clip circulaire.

Le système comprend en outre des pièces d'adaptation 550 qui lient les écrous sur lesquels est installé le système aux pièces 510 et 520. Ces pièces d'adaptation 550 sont munies d'un alésage à encoches permettant de les rendre solidaires des écrous.

En outre, ces pièces 550 peuvent être réalisées avec différents diamètres d'alésage, de sorte que les pièces 510 et 520 puissent être utilisées quelle que soit la configuration mécanique de la roue. En effet, les roues de poids lourd peuvent être attachée sur un moyeu au moyen d'écrous de tailles variées, les plus courants étant des écrous de diamètre trente-deux, trente-trois ou trente-quatre millimètres. Cette pièce 550 peut donc être réalisée avec un diamètre d'alésage permettant l'adaptation du dispositif à toutes les tailles d'écrous possibles.

La fonction d'anti desserrement est assurée par l'association des deux pièces 550 avec les pièces 510 et 520. En cas de desserrement d'écrou, la pièce 550 est entrainée en rotation par l'écrou. Cette rotation s'arrête lorsque les dents aménagées sur la partie extérieures de la pièce 550 viennent en collision avec des encoches aménagées dans les pièces 510 et 520. Ces encoches sont aménagées au bord de l'alésage des pièces 510 et 520, et circulairement réparties autour de ces alésages. Dans cet exemple, leur taille est calculée de telle sorte que la rotation d'un écrou sur son axe ne peut pas excéder 5 degrés. Le détail de ces encoches et dents est visible sur la figure 7b.

Un autre avantage de cette configuration tient à l'utilisation d'une liaison pivot. Celle-ci permet l'adaptation du système à des configurations de fixation de roue utilisant un nombre d'écrou variable. En effet, les roues de poids lourd utilisent plus souvent 8 ou 10 écrous au tour de roue. A ce titre la figure 7c montre une configuration à dix écrous. Selon le nombre d'écrous, la distance séparant deux écrous varie. L'utilisation d'une liaison pivot permet de compenser cette différence d'écartement entre les écrous et de rendre le système adaptable à une plus grande variété de roue et donc de véhicules.

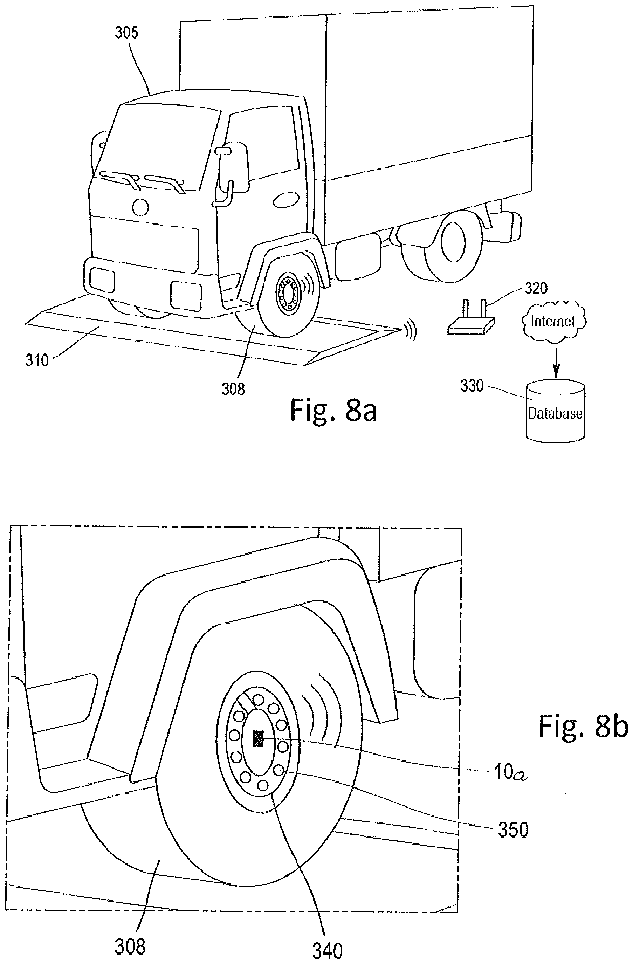

Les figures 8a et 8b montrent un véhicule poids lourd 305 dont la roue 308 est munie d'un système de comptage des tours de roue.

Bien qu'un véhicule poids lourd soit ici représenté, le système selon l'invention est utilisable pour tout type de véhicules, tel un véhicule de tourisme, un bus, un véhicule de Génie civil ou un véhicule à deux roues.

Sur l'exemple de la figure 8a, un dispositif de comptage des tours de roue est fixé sur la roue 308 à l'avant gauche du véhicule 305. Le détail de ce montage est visible sur la figure 5b.

Ce système de comptage des tours de roue peut communiquer les informations mesurées par voie hertzienne jusqu'à la passerelle 320. Les informations sont ensuite transmises jusqu'à la base de donnée 330.

Dans un exemple de réalisation, non représenté sur ce dessin, le ralentisseur 310 comprend des capteurs d'usure permettant, lors du passage du véhicule, de mesurer l'usure de la roue 308, et de communiquer les informations à la passerelle 320.

Avantageusement, la passerelle 320 peut être fixée contre un mur d'un bâtiment à proximité du lieu de stationnement habituel du véhicule 305. Ainsi, le système de comptage des tours de roue, selon un objet de l'invention, transmet l'information du nombre de tours effectués, par les roues du véhicule 305, à la passerelle 320, à chaque retour sur son lieu de stationnement.

Dans cet exemple, l'électronique de comptage des tours de roue, insérée dans son étui 10 tel que représenté sur la figure 2, est fixé sur une partie d'un enjoliveur de la roue 308.

Dans cet exemple, on a représenté un enjoliveur typiquement utilisé en Europe sur les essieux avant des véhicules poids lourds.

Ce type d'enjoliveur est constitué d'une couronne métallique 340, qui est maintenue en position par les écrous 350.

En général, cette couronne 340 est utilisée seule, mais il est possible de lui adjoindre un flasque en plastique, qui vient obturer le trou central à la couronne3 40.

Dans l'exemple de la figure 8b, l'étui 10a muni de clips comme décrit précédemment dans l'exemple de la figure 2, est fixé sur ce flasque en plastique. Préalablement, on a réalisé trois trous alignés et séparé de la distance appropriée dans ledit flasque, afin de permettre l'insertion des clips et plots décrits dans l'exemple de la figure 2a.

Alternativement, on peut aussi fixer l'étui 10a sur un système anti desserrement d'écrou qui pourrait, par exemple, être disposé sur les écrous de roue de l'essieu arrière du véhicule 5.

Dans les deux cas, que le dispositif de comptage des tours de roue soit fixé sur la roue par l'intermédiaire d'un enjoliveur, ou au moyen d'un anti desserrement d'écrou, le montage est rapide et réalisable par un technicien sans formation particulière.

Enfin, dans l'exemple de la figure 8a, la base de données 330 contient l'information du rayon de roulement ou du périmètre du pneumatique monté sur la roue 308. Ainsi, il est possible d'exécuter un simple programme informatique chargé de calculer le kilométrage en utilisant le nombre de tours de roues mesurés et en le multipliant par le périmètre du pneumatique monté sur la roue 308.

Dans une réalisation alternative, le rayon de roulement des pneumatiques peut-être enregistré dans l'électronique de comptage des tours de roue contenue dans l'étui 10a.

## Revendications

1. Système de comptage du nombre de tours de roue d'un véhicule comprenant :
- un dispositif électronique (15) de comptage du nombre de tours de roue,
- un dispositif de transmission (13,14), des données issues du dispositif électronique de comptage, jusqu'à une base de données distante,
le système comprenant en outre un boitier (10) accueillant le dispositif électronique de comptage, et le système étant **caractérisé en ce qu'**il comporte des moyens d'accrochage (30,40) permettant l'accrochage amovible du boitier sur un dispositif anti-desserrement d'écrou installé sur une roue du véhicule.

2. Système de comptage selon la revendication 1, dans lequel les moyens d'accrochage comprennent au moins un premier élément (40 solidaire du boitier, et destiné à coopérer avec au moins un second élément solidaire du dispositif anti-desserrement.

3. Système selon l'une des revendications précédentes, dans lequel les moyens d'accrochage comportent des moyens d'emboitage élastique, et dans lequel le premier élément (40) est un élément mâle solidaire du boitier destiné à coopérer et le second élément est une ouverture ménagée dans le dispositif anti-desserrement.

4. Système de comptage selon l'une des revendications précédentes, comprenant en outre des moyens (30) de reprise d'effort s'exerçant sur le boitier.

5. Système de comptage selon l'une des revendications précédentes, dans lequel le dispositif électronique de comptage des tours de roue comprend des moyens (11) permettant la mesure d'un champ magnétique.

6. Système de comptage selon la revendication 5, dans lequel le dispositif électronique de comptage comprend deux capteurs dont les axes sensibles sont orientés à 90 degrés l'un par rapport à l'autre.

7. Système de comptage selon la revendication 5, dans lequel le dispositif électronique de comptage des tours de roue comprend un unique capteur de champ magnétique.

8. Système de comptage selon l'une des revendications précédentes, dans lequel le dispositif de transmission de données comprend des moyens pour transmettre les données par voie Hertzienne, de préférence avec une portée courte ou moyenne.

9. Système de comptage des tours de roue selon l'une des revendications 1 à 8, dans lequel le dispositif de transmission de données comprend des moyens de type « Narrow Band » ou « Ultra Narrow Band ».

10. Système de comptage selon l'une des revendications précédentes, **caractérisé en ce que** le dispositif anti desserrement d'écrou comporte deux pièces (115,125), chaque pièce comprenant :
- un dispositif (130) de fixation sur écrou dont le diamètre est adaptable, et
- des moyens de coopération avec l'autre pièce du système, ces moyens permettant une adaptation de l'entraxe entre les deux dispositifs de fixation.

11. Système de calcul du rendement pneumatique d'un véhicule, comportant un système de comptage du nombre de tour selon l'une des revendications 1 à 10, et comportant en outre des moyens de suivi de l'usure des pneumatiques du véhicule dont le kilométrage est mesuré.

12. Système de calcul selon la revendication 11, dans lequel les moyens de suivi de l'usure des pneumatiques sont des dispositifs posés au sol, ou des dispositifs manuels.

## Patentansprüche

1. System zum Zählen der Anzahl von Radumdrehungen eines Fahrzeugs, das Folgendes beinhaltet:
- eine elektronische Vorrichtung (15) zum Zählen der Anzahl von Radumdrehungen,
- eine Vorrichtung zum Übertragen (13, 14) der Daten, die aus der elektronischen Vorrichtung zum Zählen stammen, an eine entfernte Datenbank,
wobei das System ferner ein Gehäuse (10) beinhaltet, das die elektronische Vorrichtung zum Zählen aufnimmt, und wobei das System **dadurch gekennzeichnet ist, dass** es Folgendes umfasst: Montagemittel (30, 40), die die abnehmbare Montage des Gehäuses an einer Schraubensicherungsvorrichtung, die an einem Rad des Fahrzeugs installiert ist, gestatten.

2. System zum Zählen nach Anspruch 1, wobei die Montagemittel mindestens ein erstes Element (40) umfassen, das fest am Gehäuse angebracht ist und dazu bestimmt ist, mit mindestens einem zweiten Element, das fest an der Sicherungsvorrichtung angebracht ist, zusammenzuwirken.

3. System nach einem der vorhergehenden Ansprüche, wobei die Montagemittel elastische Einrastmittel umfassen und wobei das erste Element (40) ein fest am Gehäuse angebrachtes Steckelement ist, das für ein Zusammenwirken bestimmt ist, und das zweite Element eine Öffnung ist, die in der Sicherungsvorrichtung bereitgestellt ist.

4. System zum Zählen nach einem der vorhergehenden Ansprüche, das ferner Mittel (30) zur Aufnahme von Kräften, die auf das Gehäuse wirken, beinhaltet.

5. System zum Zählen nach einem der vorhergehenden Ansprüche, wobei die elektronische Vorrichtung zum Zählen der Radumdrehungen Mittel (11) beinhaltet, die das Messen eines Magnetfelds gestatten.

6. System zum Zählen nach Anspruch 5, wobei die elektronische Vorrichtung zum Zählen zwei Sensoren beinhaltet, deren sensitive Achsen um 90 Grad zueinander ausgerichtet sind.

7. System zum Zählen nach Anspruch 5, wobei die elektronische Vorrichtung zum Zählen der Radumdrehungen einen einzigen Magnetfeldsensor beinhaltet.

8. System zum Zählen nach einem der vorhergehenden Ansprüche, wobei die Datenübertragungsvorrichtung Mittel zum drahtlosen Übertragen der Daten, vorzugsweise über eine kurze oder mittlere Reichweite, beinhaltet.

9. System zum Zählen der Radumdrehungen nach einem der Ansprüche 1 bis 8, wobei die Datenübertragungsvorrichtung Mittel vom Typ "Narrow Band" oder "Ultra Narrow Band" beinhaltet.

10. System zum Zählen nach einem der vorhergehenden Ansprüche, **dadurch gekennzeichnet, dass** die Schraubensicherungsvorrichtung zwei Teile (115, 125) umfasst, wobei jedes Teil Folgendes beinhaltet:
- eine Vorrichtung (130) zum Befestigen auf einer Schraube, deren Durchmesser anpassbar ist, und
- Mittel zum Zusammenwirken mit dem anderen Teil des Systems, wobei diese Mittel eine Anpassung des Mittenabstands zwischen den zwei Befestigungsvorrichtungen gestatten.

11. System zum Berechnen der Reifenleistung eines Fahrzeugs, das ein System zum Zählen der Anzahl von Drehungen nach einem der Ansprüche 1 bis 10 umfasst und das ferner Mittel zum Nachverfolgen des Verschleißes der Reifen des Fahrzeugs, dessen Kilometerzahl gemessen wird, umfasst.

12. System zum Berechnen nach Anspruch 11, wobei die Mittel zum Nachverfolgen des Verschleißes der Reifen am Boden angebrachte Vorrichtungen oder manuelle Vorrichtungen sind.

## Claims

1. System for counting the number of wheel revolutions of a vehicle, comprising:
- an electronic device (15) for counting the number of wheel revolutions,
- a device (13,14) for transmitting data from the electronic counting device to a remote database,
the electronic counting device being installed in a housing (10),
and the system being **characterized in that** it comprises attachment means (30, 40) for the removable attachment of the housing to a nut anti-loosening device installed on a wheel of the vehicle.

2. Counting system according according to Claim 1, in which the attachment means comprise at least one first element (40) secured to the housing and intended to cooperate with at least one second element secured to the anti-loosening device.

3. System according to one of the preceding claims, in which the attachment means comprise elastic engagement means, and in which the first element (40) is a male element secured to the housing intended to cooperate and the second element is an opening formed in the anti-loosening device.

4. Counting system according to one of the preceding claims, additionally comprising means (30) for taking up force exerted on the housing.

5. Counting system according to one of the preceding claims, in which the electronic device for counting wheel revolutions comprises means (11) for measuring a magnetic field.

6. Counting system according to Claim 5, in which the electronic counting device comprises two sensors whose sensitive axes are oriented at 90 degrees with respect to one another.

7. Counting system according to Claim 5, in which the electronic device for counting wheel revolutions comprises a single magnetic field sensor.

8. Counting system according to one of the preceding claims, in which the device for transmitting data comprises means for transmitting the data by hertzian link, preferably with a short or medium range.

9. System for counting wheel revolutions according to one of Claims 1 to 8, in which the device for transmitting data comprises means of the narrow band or ultra narrow band type.

10. Counting system according to one of the preceding claims, **characterized in that** the nut anti-loosening device comprises two parts (115, 125), each part comprising:
- a fastening-on-nut device (130) whose diameter is adaptable, and
- means for cooperating with the other part of the system, these means allowing an adaptation of the inter-axis distance between the two fastening devices.

11. System for calculating the tyre performance of a vehicle, comprising a system for counting the number of revolutions according to one of Claims 1 to 10, and additionally comprising means for monitoring the wear of the tyres of the vehicle whose kilometrage is measured.

12. Calculating system according to Claim 11, in which the means for monitoring the wear of the tyres are devices placed on the ground, or manual devices.
